# EUROPÄISCHE PATENTSCHRIFT

(11) **EP 3 498 581 B1**
(45) Veröffentlichungstag und Bekanntmachung des Hinweises auf die Patenterteilung: **22.07.2020**
(21) Anmeldenummer: 18207778.4
(22) Anmeldetag: 22.11.2018
(51) Int. Cl.: B62K 21/00, B62K 21/22, B62J 45/415, B62J 99/00

(54) **VERFAHREN UND VORRICHTUNG ZUR EINSTELLUNG EINER VORGEGEBENEN ÜBERSETZUNG ZWISCHEN LENKERWINKEL UND EINSCHLAGWINKEL EINES FAHRRADVORDERRADS**
METHOD AND DEVICE FOR ADJUSTING A PREDETERMINED RATIO BETWEEN HANDLEBAR ANGLE AND STEERING ANGLE OF A FRONT WHEEL OF A BICYCLE
PROCÉDÉ ET DISPOSITIF DE RÉGLAGE D'UN RAPPORT DE TRANSMISSION PRÉDÉFINI ENTRE L'ANGLE DE GUIDON ET L'ANGLE DE BRAQUAGE D'UNE ROUE AVANT DE BICYCLETTE

(30) Priorität: 13.12.2017 DE 102017222569
(43) Veröffentlichungstag der Anmeldung: 19.06.2019
(73) Patentinhaber: Robert Bosch GmbH, 70442 Stuttgart (DE)
(72) Erfinder: Dackermann, Tim, 72072 Tuebingen (DE); Dauer, Felix, 72072 Tuebingen (DE)

(56) Entgegenhaltungen:
- EP-A1- 2 085 307
- EP-A1- 2 727 806
- EP-A1- 2 985 215
- EP-A1- 3 263 436
- WO-A1-2014/118504
- WO-A1-2018/051827
- DE-A1- 10 242 945
- DE-U1- 9 409 592
- JP-A- 2013 071 605

## Beschreibung

### Stand der Technik

Die Erfindung bezeichnet ein Verfahren und eine Vorrichtung zur Einstellung einer vorgegebenen Übersetzung zwischen Lenkerwinkel und Einschlagwinkel eines Fahrradvorderrads.

Aus den Dokumenten DE 10 2008 043 049 A1 und EP 2 085 307 A1 ist bereits bekannt, den Einschlagwinkel eines gelenkten Rads eines Fahrzeugs in Abhängigkeit der erfassten Geschwindigkeit des Fahrrads einzustellen. Dies hat einen Sicherheitsaspekt, da zum Beispiel ein großer Lenkerwinkel bei hohen Geschwindigkeiten schnell zu einem Überlenken und einem daraus folgenden Unfall führen kann.

Es ist jedoch aus dem Stand der Technik nicht bekannt, die Einstellung des Übersetzungsverhältnisses von Lenkerwinkel und Einschlagwinkel auch für Situationen zu nutzen, in denen weniger eine sicherheitskritische Situation für den Fahrradfahrer vorherrscht.

### Offenbarung der Erfindung

Um diesem Problem zu begegnen, wird erfindungsgemäß ein Verfahren nach Anspruch 1, sowie eine erfindungsgemäße Vorrichtung, welche das erfindungsgemäße Verfahren ausführt, vorgeschlagen. Zusätzlich wird erfindungsgemäß ein Fahrrad, insbesondere ein elektrisch betriebenes Fahrrad, mit einer erfindungsgemäßen Vorrichtung vorgeschlagen.

Bei dem Verfahren wird zunächst ein Wiegetritt des Fahrradfahrers erkannt. Solch ein Wiegetritt entsteht beispielsweise beim Bergauffahren, wobei der Fahrradfahrer hierbei, um mehr Kraft auf die Pedalen zu bringen, aus dem Sattel geht und das volle Körpergewicht jeweils auf das rechte oder linke Pedal bringt. Dies hat ein seitliches hin- und herwiegen des Lenkers zu Folge. Eine andere Situation, bei der sich ein Wiegetritt des Fahrers ergeben kann, ist, wenn dieser während der Fahrt aus dem Sattel geht um die Muskulatur zu entspannen. Analog bewegt sich das gelenkte Vorderrad beim Wiegetritt mit und es kommt zu einem leichten Schlingern des Fahrrads. Erfindungsgemäß wird in einem folgenden Verfahrensschritt in Abhängigkeit des erkannten Wiegetritts eine vorgegebene Übersetzung zwischen Lenkerwinkel und Einschlagwinkel mittels eines an einer Lenkstange des Fahrrads angeordneten Aktuators eingestellt. Diese Einstellung der vorgegebenen Übersetzung kann unterschiedlich vorgenommen werden. So kann es beispielsweise sein, dass die eingestellte vorgegebene Übersetzung vorsieht, dass die Übersetzung im Vergleich zu einer Situation ohne Wiegetritt erhöht wird, falls ein Wiegetritt erkannt wird. In diesem Fall würde also bei einem durch den Fahrer erzeugten Lenkerwinkel ein größerer Einschlagwinkel am Vorderrad erzeugt werden. Das Schlingern des Fahrrads beim Wiegetritt würde also im Vergleich zum üblichen Wiegetritt noch vergrößert werden. In einem anderen Fall sieht die eingestellte, vorgegebene Übersetzung vor, dass das Vorderrad immer entgegengesetzt zur Richtung des erzeugten Lenkerwinkels eingeschlagen wird. Somit könnte ein Schlingern des Fahrrads immer in entgegengesetzte Richtung des Lenkerwinkels erzeugt werden. Vorzugsweise wird beim Erkennen des Wiegetritts die vorgegebene Übersetzung zwischen Lenkerwinkel und Einschlagwinkel des Vorderrads auf einen Wert kleiner 1 eingestellt. Das bedeutet, dass bei einem erzeugten bestimmten Lenkerwinkel ein kleinerer Einschlagwinkel des Vorderrads im Vergleich zum üblichen Wiegetritt erzeugt wird. Somit kann das Schlingern des Fahrrads verringert werden und sogar eine gewünschte Geradeausfahrt des Fahrrads während des Wiegetritts beibehalten werden. Das hätte beispielsweise den Vorteil, dass der Fahrer Kraft sparen könnte, da er während des Wiegetritts weniger Weg zurückzulegen hat.

Bevorzugt wird zusätzlich eine Geschwindigkeit des Fahrrads erfasst. Hierzu kann beispielsweise eine Drehzahl des Vorderrads erfasst werden. In einem folgenden Verfahrensschritt wird die vorgegebene Übersetzung zwischen Lenkerwinkel und Einschlagwinkel des Vorderrads zusätzlich in Abhängigkeit der erfassten Geschwindigkeit eingestellt. Ein Wiegetritt, welcher bei relativ hohen Geschwindigkeit beispielsweise bergab erzeugt wird, birgt das Risiko des Übersteuerns. Somit droht der Fahrradfahrer während des Wiegetritts beispielsweise aufgrund des Schlingerns des Fahrrads über das Fahrrad zu fallen.

Bevorzugt wird ein zum Vortrieb des Fahrrads ein durch einen Fahrer erzeugtes Drehmoment erfasst. Dieses auch als Fahrermoment bezeichnete Drehmoment, welches durch Treten des Fahrers in die Pedale entsteht, zeigt beim Wiegetritt einen charakteristischen Verlauf. Das erzeugte Drehmoment ist im Vergleich zum üblichen Drehmoment, welcher aus dem Sattel erzeugt wird, einerseits sehr hoch. Außerdem steigt und fällt das Drehmoment beim Wiegetritt sprunghafter an als beim üblichen Tritt in die Pedale. Somit kann entsprechend der Wiegetritt deutlich erkannt werden. Alternativ oder zusätzlich wird eine Schräglage des Fahrrads erfasst und der Wiegetritt anschließend in Abhängigkeit der erfassten Schräglage des Fahrrads erkannt. Während des Wiegetritts weist das Fahrrad eine gewisse Schräglage auf, welche charakteristisch während des Wiegetritts von links nach rechts wechselt. Auch somit kann entsprechend der Wiegetritt deutlich erkannt werden.

Vorzugsweise wird die vorgegebene Übersetzung zwischen Lenkerwinkel und Einschlagwinkel des Vorderrads bei Vergrößerung des Lenkerwinkels linear verändert. Besonders die lineare Verringerung der Übersetzung bei Vergrößerung des Lenkerwinkels würde den Vorteil erbringen, dass größeren Lenkerwinkeln kleinere, vorgegebene Übersetzungen zugeordnet wären und somit der Einschlagswinkel des Vorderrads hierbei kleiner werden würde. Eine Geradeausfahrt während des Wiegetritts könnte somit noch besser beibehalten werden. Alternativ wird die vorgegebene Übersetzung zwischen Lenkerwinkel und Einschlagwinkel des Vorderrads bei Vergrößerung des Lenkerwinkels nichtlinear verändert. Beispielsweise könnte die vorgegebene Übersetzung gegenüber dem Lenkerwinkel progressiv verringert werden. Kleineren Lenkerwinkeln, welche annährend einer Geradeausfahrt entsprechen, wären also kaum veränderte Übersetzungen zugeordnet, während größeren Lenkerwinkel stark verringerte Übersetzungen zugeordnet wären. Eine Geradeausfahrt während eines Wiegetritts könnte auch damit erreicht werden.

Bevorzugt ist die vorgegebene Übersetzung abhängig von einem Fahrerwunsch veränderbar. So kann es beispielsweise sein, dass bestimmte Fahrradfahrer ein leichtes Schlingern des Fahrrads während des Wiegetritts als komfortabel empfinden und somit ein größeres Übersetzungsverhältnis zwischen Lenkerwinkel und Einschlagwinkel bevorzugen. Andere Fahrer bevorzugen hingegen eine Geradeausfahrt während des Wiegetritts. Entsprechende Übersetzungsprofile für jeden Typ Fahrer können hinterlegt werden und somit eine individuelle Anpassung an den Fahrradfahrer auf Wunsch ermöglicht werden.

Die Erfindung weist zusätzlich eine Vorrichtung auf, welche zur Ausführung des zuvor beschriebenen erfindungsgemäßen Verfahrens ausgebildet ist. Hierbei weist die Vorrichtung eine Recheneinheit auf, welche dazu ausgebildet ist, einen Wiegetritt eines Fahrradfahrers zu erkennen. Außerdem weist die Vorrichtung einen an einer Lenkstange des Fahrrads angeordneten Aktuator auf. Die Recheneinheit ist in diesem Zusammenhang dazu ausgebildet, in Abhängigkeit des erkannten Wiegetritts eine vorgegebene Übersetzung zwischen Lenkerwinkel und Einschlagwinkel des Vorderrads zu ermitteln und außerdem die vorgegebene Übersetzung dem Aktuator zu übermitteln. Der an der Lenkstange angeordnete Aktuator wiederum ist dazu ausgebildet, die ermittelte, vorgegebene Übersetzung an der Lenkstange einzustellen.

Vorzugsweise weist die Vorrichtung zusätzlich einen ersten Sensor auf, welcher dazu ausgebildet ist, ein zum Vortrieb des Fahrrads durch einen Fahrer erzeugtes Drehmoment zu erfassen. Bei dem Sensor kann es sich beispielsweise um einen Drehmomentsensor handeln. Alternativ oder zusätzlich weist die Vorrichtung einen zweiten Sensor auf, welcher dazu ausgebildet ist, eine Schräglage des Fahrrads zu erfassen. Es kann sich hierbei beispielsweise um einen Neigungssensor handeln. Die Recheneinheit ist in diesem Zusammenhang dazu ausgebildet, den Wiegetritt in Abhängigkeit des erfassten Drehmoments und/oder der erfassten Schräglage zu erkennen.

Bevorzugt weist die Vorrichtung zusätzlich einen dritten Sensor auf, welcher dazu ausgebildet ist, eine Geschwindigkeit des Fahrrads zu erfassen. Es kann sich hierbei beispielsweise um einen Drehzahlsensor handeln, welcher am Vorderrad des Fahrrads angeordnet ist. Die Recheneinheit ist in diesem Zusammenhang dazu ausgebildet, die vorgegebene Übersetzung zusätzlich in Abhängigkeit der erfassten Geschwindigkeit zu erfassen.

Vorzugsweise ist der Aktuator als ein CVT (Continuously Variable Transmission)-Getriebe ausgebildet. Dieses CVT-Getriebe ist wiederum dazu ausgebildet, die vorgegebene Übersetzung zwischen zwei zueinander verschiebbaren Komponenten der Lenkstange stufenlos einzustellen. Die Lenkstange kann hierzu in einem Bereich aus beispielsweise zwei parallel zueinander gelagerten Kegelscheiben ausgebildet sein, deren Position zueinander verändert werden kann. Je nach Position der Kegelscheiben relativ zueinander und der sich somit ergebenden Position der Kette auf den Kegelscheiben, rotieren die Kegelkörper mit unterschiedlicher Drehzahl und ermöglichen somit ein stufenloses Einstellen der vorgegebenen Übersetzung. Es ist somit anders als bei dem steer-by-wire-Prinzip weiterhin dauerhaft eine mechanische Kopplung zwischen Lenker und Lenkbewegung vorhanden.

Bevorzugt weist die Vorrichtung zusätzlich eine Signalerzeugungseinheit auf, welche dazu ausgebildet ist, ein Signal des Fahrradfahrers zu erzeugen. Das Signal repräsentiert hierbei beispielsweise einen Wunsch des Fahrers auf eine bestimmte, vorgegebene Übersetzung zwischen Lenkerwinkel und Einschlagwinkel. Die Signalerzeugungseinheit kann beispielsweise als eine Taste ausgebildet sein, mittels welcher der Fahrer das vorgegebene Übersetzungsverhältnis vergrößern oder verkleinern kann.

Vorzugsweise weist die Vorrichtung zusätzlich einen vierten Sensor auf, welcher dazu ausgebildet ist, den momentanen, mittels des Fahrradlenkers erzeugten Lenkerwinkel zu erfassen. Bei dem vierten Sensor kann es sich beispielsweise um einen Lenkerwinkelsensor handeln. Die Recheneinheit ist in diesem Zusammenhang dazu ausgebildet, die vorgegebene Übersetzung zwischen Lenkerwinkel und Einschlagwinkel des Vorderrads bei erfasster Vergrößerung des Lenkerwinkels zu verändern. Bei der Veränderung der Übersetzung kann es sich beispielsweise um eine lineare oder nichtlineare Veränderung bei Vergrößerung des Lenkerwinkels handeln.

Die Erfindung weist außerdem ein Fahrrad mit der zuvor beschriebenen, erfindungsgemäßen Vorrichtung auf. Bei dem Fahrrad kann es sich beispielsweise um ein elektrisch betriebenes Fahrrad oder ein S-Pedelec handeln.

### Beschreibung der Zeichnungen

Figur 1 zeigt eine Ausführungsform des erfindungsgemäßen Verfahrens zur Einstellung einer vorgegebenen Übersetzung zwischen Lenkerwinkel und Einschlagwinkel eines Vorderrads eines Fahrrads.
Figur 2 zeigt schematisch eine Ausführungsform der erfindungsgemäßen Vorrichtung.
Figur 3 zeigt in der Draufsicht beispielhaft eine vorgegebene Übersetzung mit einem Wert kleiner 1.
Figur 4 zeigt schematisch beispielhaft ein Fahrrad mit einer erfindungsgemäßen Vorrichtung.

### Ausführungsbeispiele

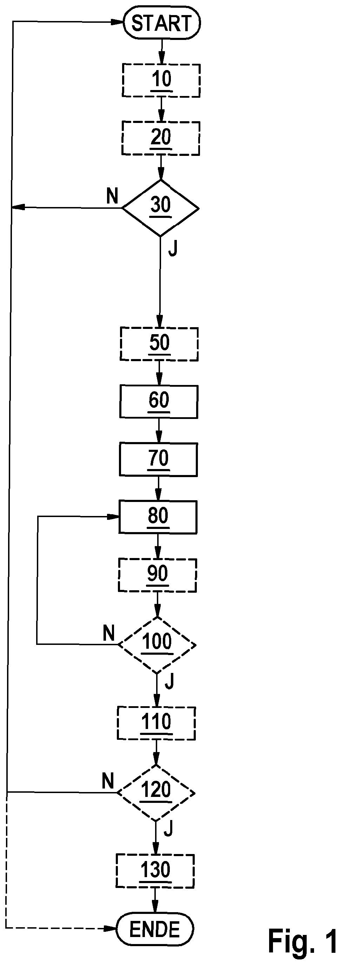

Figur 1 zeigt in Form eines Ablaufdiagramms eine Ausführungsform eines Verfahrens zur Einstellung einer vorgegebenen Übersetzung zwischen Lenkerwinkel und Einschlagwinkel eines gelenkten Vorderrads eines Fahrrads.

Hierbei wird in einem ersten Verfahrensschritt überprüft, ob ein Wiegetritt des Fahrradfahrers momentan vorliegt. Befindet sich der Fahrer aktuell nicht im Wiegetritt, so wird das Verfahren von vorne gestartet oder alternativ beendet. Befindet sich der Fahrradfahrer momentan im Wiegetritt, so wird in Verfahrensschritt 60 eine vorgegebene Übersetzung zwischen Lenkerwinkel und Einschlagwinkel eines Vorderrads des Fahrrads mittels einer Recheneinheit ermittelt. Daraufhin wird in Verfahrensschritt 80 die ermittelte, vorgegebene Übersetzung an einen an einer Lenkstange angeordneten Aktuator übermittelt. In einem darauffolgenden Verfahrensschritt 80 wird die ermittelte, vorgegebene Übersetzung mittels des Aktuators eingestellt. Daraufhin wird das Verfahren beendet.

Optional wird in Verfahrensschritt 60 die vorgegebene Übersetzung zwischen Lenkerwinkel und Einschlagwinkel mit einem Wert kleiner 1 ermittelt. Dieser ermittelte Wert kleiner 1 wird dann in Verfahrensschritt 80 mittels des Aktuators eingestellt.

Optional kann in einem Verfahrensschritt 10 zunächst ein zum Vortrieb des Fahrrads durch einen Fahrer erzeugtes Drehmoments mittels eines ersten Sensors erfasst werden. Alternativ oder zusätzlich kann in einem weiteren Verfahrensschritt 20 eine Schräglage des Fahrrads mittels eines zweiten Sensors erfasst werden. Bei der Entscheidung im Folgenden Verfahrensschritt 30, ob ein Wiegetritt des Fahrers vorliegt oder nicht, werden das erfasste Drehmoment und/oder die erfasste Schräglage mit berücksichtigt.

Optional wird in einem auf den Verfahrensschritt 30 folgenden Verfahrensschritt 50 eine Geschwindigkeit des Fahrrads mittels eines dritten Sensors erfasst. Bei der folgenden Ermittlung der vorgegebenen Übersetzung in Verfahrensschritt 60 kann die Geschwindigkeit dann mit berücksichtigt werden.

Optional kann in einem auf den Verfahrensschritt 80 folgenden Verfahrensschritt 90 der momentane Lenkerwinkel mittels eines vierten Sensors erfasst werden. In dem Folgenden optionalen Verfahrensschritt wird anschließend geprüft, ob eine Vergrößerung des Lenkerwinkels im Vergleich zum vorherigen Lenkerwinkel vorliegt. Liegt keine Vergrößerung vor, sondern ist der Lenkerwinkel aktuell gleichbleibend, so bleibt die vorgegebene, mittels des Aktuators eingestellte Übersetzung gleich. Wird allerdings eine Vergrößerung des Lenkerwinkels festgestellt, so wird in dem folgenden, optionalen Verfahrensschritt 110 die vorgegebene Übersetzung linear verändert. Beispielsweise kann die vorgegebene Übersetzung bei Vergrößerung des Lenkerwinkels linear verringert werden. Alternativ kann die vorgegebene Übersetzung auch nichtlinear verändert werden.

Optional wird in einem auf den Verfahrensschritt 110 folgenden Verfahrensschritt 120 geprüft, ob ein Signal erfasst wird, welches auf eine von dem Fahrer gewünschte Änderung der eingestellten, vorgegebenen Übersetzung hindeutet. Wird hierbei kein Signal erfasst, so wird das Verfahren von vorne gestartet oder alternativ beendet. Wird ein solcher Fahrerwunsch erfasst, so wird in dem Folgenden optionalen Verfahrensschritt 130 die vorgegebene Übersetzung entsprechend des Fahrerwunsches angepasst.

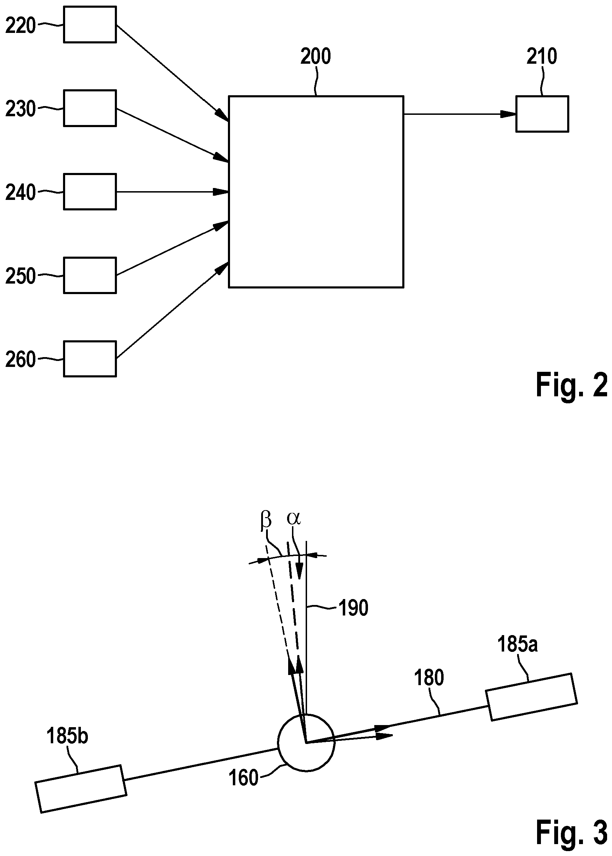

Figur 2 zeigt schematisch eine erste Ausführungsform einer Vorrichtung zur Ausführung des in Figur 1 gezeigten Verfahrens. Die Vorrichtung weist hierbei eine Recheneinheit 200 auf, welche dazu ausgebildet ist, einen Wiegetritt eines Fahrers eines Fahrrads zu erkennen und abhängig von dem Erkennen eines Wiegetritts eine vorgegebene Übersetzung zwischen Lenkerwinkel und Einschlagwinkel des Fahrradvorderrads zu ermitteln. Außerdem weist die Vorrichtung einen an einer Lenkstange des Fahrrads angeordneten Aktuator 210 auf. Die Recheneinheit 200 ist dazu ausgebildet, die ermittelte, vorgegebene Übersetzung dem Aktuator 210 zu übermitteln. Der Aktuator 210 wiederum ist dazu ausgebildet, die übermittelte, vorgegebene Übersetzung an der Lenkstange einzustellen. Der Aktuator kann hierbei beispielsweise als CVT-Getriebe ausgebildet sein, welches dazu ausgebildet ist, zwei zueinander verschiebbare Komponenten der Lenkstange stufenlos einzustellen.

Optional weist die Vorrichtung zusätzlich einen ersten Sensor 220 auf, welcher dazu ausgebildet ist, ein zum Vortrieb des Fahrrads durch einen Fahrer erzeugtes Drehmoment zu erfassen. Die Recheneinheit 200 ist hierbei dazu ausgebildet, den Wiegetritt zusätzlich in Abhängigkeit des erfassten Drehmoments zu ermitteln. Alternativ oder zusätzlich weist die Vorrichtung optional einen zweiten Sensor 230 auf, welcher dazu ausgebildet ist, eine Schräglage des Fahrrads zu erfassen. Die Recheneinheit 200 ist dazu ausgebildet, den Wiegetritt in Abhängigkeit der erfassten Schräglage zu erkennen.

Optional weist die Vorrichtung einen dritten Sensor 240 auf, welcher dazu ausgebildet ist, eine Geschwindigkeit des Fahrrads zu erfassen. Die Recheneinheit 200 ist in diesem Zusammenhang dazu ausgebildet, die vorgegebene Übersetzung in Abhängigkeit der erfassten Geschwindigkeit zu ermitteln.

Optional weist die Vorrichtung einen vierten Sensor 250 auf, welcher dazu ausgebildet ist, den Lenkerwinkel, welcher momentan mittels des Lenkers erzeugt wird, zu erfassen. Die Recheneinheit 200 ist in diesem Zusammenhang dazu ausgebildet, die vorgegebene Übersetzung zwischen Lenkerwinkel und Einschlagwinkel des Vorderrads bei daraufhin erfasster Vergrößerung des momentanen Lenkerwinkels zu verändern. Die Recheneinheit 200 kann beispielsweise die Übersetzung linear oder nichtlinear verändern.

Optional weist die Vorrichtung eine Signalerzeugungseinheit 260 auf. Diese Signalerzeugungseinheit 260 ist dazu ausgebildet, die vorgegebene Übersetzung in Abhängigkeit von dem erzeugten Signal zu verändern. Das erzeugte Signal kann auf einen Fahrerwunsch zur Veränderung der vorgegebenen Übersetzung hindeuten.

Figur 3 zeigt in der Draufsicht einen Fahrradlenker 180 mit Handgriffen 185a und 185b, wobei der Lenker 180 um einen Lenkerwinkel β gegenüber einer möglichen Geradeausfahrt 190 eingeschlagen ist. Der aus dem Lenkerwinkel β entstehende Einschlagwinkel α eines hier nicht dargestellten Vorderrads entspricht hierbei jedoch nicht dem Lenkerwinkel β. Grund hierfür ist eine Übersetzung zwischen Lenkerwinkel β und Einschlagwinkel α des Vorderrads mit einem Wert kleiner 1, welche mittels des Aktuators 160 an der hier nicht dargestellten Lenkstange eingestellt ist. Der Einschlagwinkel α des Vorderrads ist somit um die Differenz α subtrahiert von β kleiner als der Lenkerwinkel β.

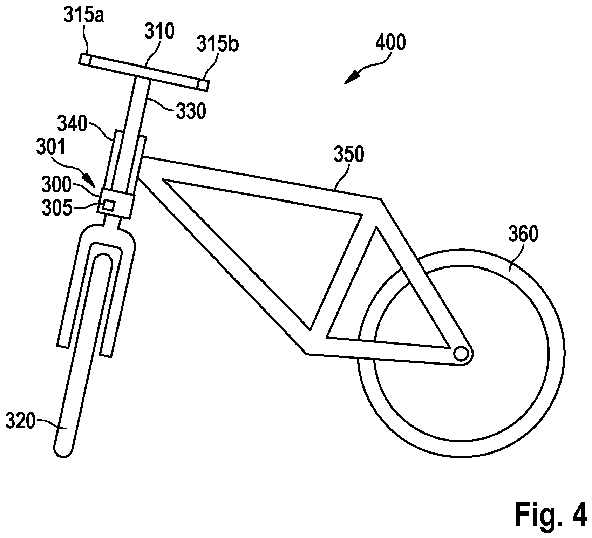

Figur 4 zeigt schematisch als Zweirad ein Fahrrad 400 mit einer Vorrichtung, wie zuvor in Figur 2 beschrieben.

Der Aktuator 300 der Vorrichtung 301 ist hierbei an einer Lenkstange 330 angeordnet, welche drehbar innerhalb eines Steuerrohrs 340 des Fahrrads angeordnet ist. Die Recheneinheit 305 ist in dieser Figur 4 in dem Aktuator 300 integriert. Es wäre jedoch auch beispielsweise vorstellbar, dass die Recheneinheit 305 separat an dem Fahrrad 400 angeordnet ist oder Bestandteil eines in dieser Figur nicht dargestellten ersten, zweiten, dritten oder vierten Sensors ist.

Das Fahrrad weist weiterhin einen Lenker 310 mit Handgriffen 315a und 315b auf mittels dem ein Lenkerwinkel erzeugt werden kann. Das lenkbare Vorderrad 320 vollzieht abhängig von der mittels des Aktuators 300 eingestellten Übersetzung zwischen Lenkerwinkel und Einschlagwinkel des Vorderrads 320 eine Drehung um den somit erzeugten Einschlagwinkel. Außerdem weist das Fahrrad 400 einen Rahmen 350 und ein an dem Rahmen 350 angeordnetes Hinterrad 360 auf.

Das Fahrrad 400 kann beispielsweise auch elektrisch betrieben werden.

## Patentansprüche

1. Verfahren zur Einstellung (80) einer vorgegebenen Übersetzung zwischen Lenkerwinkel (β) und Einschlagwinkel (α) eines Vorderrads (320) eines Fahrrads (400), wobei das Verfahren die folgenden Verfahrensschritte aufweist:
- Erkennen (30) eines Wiegetritts, und
- Einstellung (80) der vorgegebenen Übersetzung zwischen Lenkerwinkel (β) und Einschlagwinkel (α) abhängig von dem erkannten Wiegetritt (30) mittels eines an einer Lenkstange (330) des Fahrrads (400) angeordneten Aktuators (200, 301).

2. Verfahren nach Anspruch 1, wobei beim Erkennen (30) des Wiegetritts, die vorgegebene Übersetzung zwischen Lenkerwinkel (β) und Einschlagwinkel (α) des Vorderrads (320) auf einen Wert kleiner 1 eingestellt wird.

3. Verfahren nach einem der Ansprüche 1 oder 2, **dadurch gekennzeichnet, dass** das Verfahren die folgenden Verfahrensschritte aufweist:
- Erfassung (50) einer Geschwindigkeit des Fahrrads, und
- Einstellung (80) der vorgegebenen Übersetzung zwischen Lenkerwinkel (β) und Einschlagwinkel (α) des Vorderrads (320) zusätzlich in Abhängigkeit der erfassten Geschwindigkeit des Fahrrads (400).

4. Verfahren nach einem der Ansprüche 1 bis 3, **dadurch gekennzeichnet, dass** das Verfahren die folgenden zusätzlichen Verfahrensschritte aufweist:
- Erfassung (10) eines zum Vortrieb des Fahrrads (400) durch einen Fahrer erzeugten Drehmoments, und/oder
- Erfassung (20) einer Schräglage des Fahrrads (400), und
- Erkennen (30) des Wiegetritts des Fahrradfahrers zusätzlich in Abhängigkeit des erfassten Drehmoments und/oder der erfassten Schräglage des Fahrrads (400).

5. Verfahren nach einem der Ansprüche 1 bis 4, **dadurch gekennzeichnet, dass** die vorgegebene Übersetzung zwischen Lenkerwinkel (β) und Einschlagwinkel (α) des Vorderrads (320) bei Vergrößerung des Lenkerwinkels (β) linear verändert, insbesondere linear verringert wird.

6. Verfahren nach einem der Ansprüche 1 bis 4, **dadurch gekennzeichnet, dass** die vorgegebene Übersetzung zwischen Lenkerwinkel (β) und Einschlagwinkel (α) des Vorderrads (320) bei Vergrößerung des Lenkerwinkels (β) nichtlinear verändert, insbesondere nichtlinear verringert wird.

7. Verfahren nach einem der Ansprüche 1 bis 6, **dadurch gekennzeichnet, dass** die vorgegebene Übersetzung abhängig von einem Fahrerwunsch veränderbar (130) ist.

8. Vorrichtung (301) zur Ausführung eines Verfahrens nach einem der Ansprüche 1 bis 7, wobei die Vorrichtung (301) aufweist
- eine Recheneinheit (200, 305), dazu ausgebildet einen Wiegetritt eines Fahrers des Fahrrads (400) zu erkennen, und
- einen an einer Lenkstange (330) des Fahrrads (400) angeordneten Aktuator (210, 300)
wobei die Recheneinheit (200, 305) dazu ausgebildet ist, in Abhängigkeit des erkannten Wiegetritts eine vorgegebene Übersetzung zwischen Lenkerwinkel (β) und Einschlagwinkel (α) des Vorderrads (320) zu ermitteln, und die vorgegebene Übersetzung dem Aktuator (210, 300) zu übermitteln, wobei der Aktuator (210, 300) dazu ausgebildet ist, die vorgegebene Übersetzung an der Lenkstange (330) einzustellen.

9. Vorrichtung (301) nach Anspruch 8, **dadurch gekennzeichnet, dass** die Vorrichtung (301) zusätzlich aufweist
- einen ersten Sensor (220), dazu ausgebildet ein zum Vortrieb des Fahrrads (400) durch einen Fahrer erzeugtes Drehmoments zu erfassen, und/oder
- einen zweiten Sensor (230), dazu ausgebildet, eine Schräglage des Fahrrads (400) zu erfassen,
wobei die Recheneinheit (200, 305) zusätzlich dazu ausgebildet ist, den Wiegetritt in Abhängigkeit des erfassten Drehmoments und/oder der erfassten Schräglage zu erkennen.

10. Vorrichtung (301) nach einem der Ansprüche 8 oder 9, **dadurch gekennzeichnet, dass** die Vorrichtung (301) zusätzlich aufweist
- einen dritten Sensor (240), dazu ausgebildet, eine Geschwindigkeit des Fahrrads (400) zu erfassen,
wobei die Recheneinheit (200, 305) zusätzlich dazu ausgebildet ist, die vorgegebene Übersetzung in Abhängigkeit der erfassten Geschwindigkeit zu ermitteln.

11. Vorrichtung (301) nach einem der Ansprüche 8 bis 10, **dadurch gekennzeichnet, dass** der Aktuator (210, 300) als ein CVT-Getriebe ausgebildet ist, wobei das CVT-Getriebe dazu ausgebildet ist, eine Übersetzung zwischen zwei zueinander verschiebbaren Komponenten der Lenkstange (330) stufenlos einzustellen.

12. Vorrichtung (301) nach einem der Ansprüche 8 bis 11, **dadurch gekennzeichnet, dass** die Vorrichtung (301) zusätzlich aufweist,
- eine Signalerzeugungseinheit (260), dazu ausgebildet, ein Signal des Fahrradfahrers zu erzeugen,
wobei die Recheneinheit (200, 305) dazu ausgebildet ist, die vorgegebene Übersetzung in Abhängigkeit von dem erzeugten Signal zu verändern.

13. Vorrichtung (301) nach einem der Ansprüche 8 bis 12, **dadurch gekennzeichnet, dass** die Vorrichtung (301) zusätzlich aufweist
- einen vierten Sensor (250), dazu ausgebildet, den Lenkerwinkel (β) zu erfassen, wobei die Recheneinheit (200, 305) dazu ausgebildet ist, die vorgegebene Übersetzung zwischen Lenkerwinkel (β) und Einschlagwinkel (α) des Vorderrads (320) bei Vergrößerung des Lenkerwinkels (β), insbesondere linear oder nichtlinear, zu verändern.

14. Fahrrad (400), insbesondere elektrisch betriebenes Fahrrad, mit einer Vorrichtung (301) nach einem der Ansprüche 8 bis 13.

## Claims

1. Method for adjusting (80) a predetermined ratio between handlebar angle (β) and steering angle (α) of a front wheel (320) of a bicycle (400), wherein the method has the following method steps:
- detecting (30) out-of-the-saddle riding, and
- adjusting (80) the predefined ratio between handlebar angle (β) and steering angle (α) as a function of the detected out-of-the-saddle riding (30), by means of an actuator (200, 301) arranged on a handlebar (330) of the bicycle (400).

2. Method according to Claim 1, wherein when out-of-the-saddle riding is detected (30), the predefined ratio between handlebar angle (β) and steering angle (α) of the front wheel (320) is adjusted to a value less than 1.

3. Method according to either of Claims 1 and 2, **characterized in that** the method has the following method steps:
- measuring (50) a speed of the bicycle, and
- adjusting (80) the predefined ratio between handlebar angle (β) and steering angle (α) of the front wheel (320) additionally as a function of the measured speed of the bicycle (400).

4. Method according to one of Claims 1 to 3, **characterized in that** the method has the following additional method steps:
- measuring (10) a torque produced by a rider to drive the bicycle (400) forward, and/or
- measuring (20) an inclination of the bicycle (400), and
- detecting (30) out-of-the-saddle riding of the cyclist additionally as a function of the measured torque and/or the measured inclination of the bicycle (400).

5. Method according to one of Claims 1 to 4, **characterized in that** the predefined ratio between handlebar angle (β) and steering angle (α) of the front wheel (320) is changed linearly, in particular is reduced linearly, when the handlebar angle (β) is increased.

6. Method according to one of Claims 1 to 4, **characterized in that** the predefined ratio between handlebar angle (β) and steering angle (α) of the front wheel (320) is changed non-linearly, in particular reduced non-linearly, when the handlebar angle (β) is increased.

7. Method according to one of Claims 1 to 6, **characterized in that** the predefined ratio can be varied (130) as a function of a rider's request.

8. Device (301) for carrying out a method according to one of Claims 1 to 7, wherein the device (301) has
- a computing unit (200, 305), designed to detect out-of-the-saddle riding of a rider of the bicycle (400), and
- an actuator (210, 300) arranged on a handlebar (330) of the bicycle (400),
wherein the computing unit (200, 305) is designed to determine a predefined ratio between handlebar angle (β) and steering angle (α) of the front wheel (320) as a function of the detected out-of-the-saddle riding, and to transmit the predefined ratio to the actuator (210, 300), wherein the actuator (210, 300) is designed to adjust the predefined ratio on the handlebar (330).

9. Device (301) according to Claim 8, **characterized in that** the device (301) additionally has
- a first sensor (220), designed to measure a torque produced by a rider to drive the bicycle (400) forward, and/or
- a second sensor (230), designed to measure an inclination of the bicycle (400),
wherein the computing unit (200, 305) is additionally designed to detect the out-of-the-saddle-riding as a function of the measured torque and/or the measured inclination.

10. Device (301) according to either of Claims 8 and 9, **characterized in that** the device (301) additionally has
- a third sensor (240), designed to measure a speed of the bicycle (400),
wherein the computing unit (200, 305) is additionally designed to determine the predefined ratio as a function of the measured speed.

11. Device (301) according to one of Claims 8 to 10, **characterized in that** the actuator (210, 300) is designed as a CVT transmission, wherein the CVT transmission is designed to adjust a ratio between two mutually displaceable components of the handlebar (330) continuously.

12. Device (301) according to one of Claims 8 to 11, **characterized in that** the device (301) additionally has
- a signal generating unit (260), designed to generate a signal of the cyclist,
wherein the computing unit (200, 305) is designed to change the predefined ratio as a function of the generated signal.

13. Device (301) according to one of Claims 8 to 12, **characterized in that** the device (301) additionally has
- a fourth sensor (250), designed to measure the handlebar angle (β),
wherein the computing unit (200, 305) is designed to change the predefined ratio between handlebar angle (β) and steering angle (α) of the front wheel (320), in particular linearly or nonlinearly, when the handlebar angle (β) is increased.

14. Bicycle (400), in particular an electrically operated bicycle, having a device (301) according to one of Claims 8 to 13.

## Revendications

1. Procédé de réglage (80) d'un rapport de transmission prédéfini entre un angle de guidon (β) et un angle de braquage (α) d'une roue avant (320) d'une bicyclette (400), le procédé comprenant les étapes de procédé suivantes consistant à :
- reconnaître (30) un pédalage en danseuse, et
- régler (80) le rapport de transmission prédéfini entre l'angle de guidon (β) et l'angle de braquage (α) en fonction du pédalage en danseuse (30) reconnu au moyen d'un actionneur (200, 301) disposé sur la barre de direction (330) de la bicyclette (400).

2. Procédé selon la revendication 1, dans lequel, lorsqu'un pédalage en danseuse est reconnu (30), le rapport de transmission prédéfini entre l'angle de guidon (β) et l'angle de braquage (α) de la roue avant (320) est réglé sur une valeur inférieure à 1.

3. Procédé selon l'une quelconque des revendications 1 et 2, **caractérisé en ce que** le procédé comprend les étapes de procédé suivantes consistant à :
- détecter (50) une vitesse de la bicyclette, et
- régler (80) le rapport de transmission prédéfini entre l'angle de guidon (β) et l'angle de braquage (α) de la roue avant (320) en outre en fonction de la vitesse détectée de la bicyclette (400) .

4. Procédé selon l'une quelconque des revendications 1 à 3, **caractérisé en ce que** le procédé comprend les étapes de procédé supplémentaires suivantes consistant à :
- détecter (10) un couple généré par un cycliste pour faire avancer la bicyclette (400), et/ou
- détecter (20) une position inclinée de la bicyclette (400), et
- reconnaître (30) le pédalage en danseuse du cycliste en outre en fonction du couple détecté et/ou de la position inclinée détectée de la bicyclette (400).

5. Procédé selon l'une quelconque des revendications 1 à 4, **caractérisé en ce que** le rapport de transmission prédéfini entre l'angle de guidon (β) et l'angle de braquage (α) de la roue avant (320) est modifié de manière linéaire, en particulier diminué de manière linéaire, en cas d'augmentation de l'angle de guidon (β).

6. Procédé selon l'une quelconque des revendications 1 à 4, **caractérisé en ce que** le rapport de transmission prédéfini entre l'angle de guidon (β) et l'angle de braquage (α) de la roue avant (320) est modifié de manière non linéaire, en particulier diminué de manière non linéaire, en cas d'augmentation de l'angle de guidon (β).

7. Procédé selon l'une quelconque des revendications 1 à 6, **caractérisé en ce que** le rapport de transmission prédéfini peut être varié en fonction d'un souhait du cycliste (130).

8. Dispositif (301) permettant d'effectuer un procédé selon l'une quelconque des revendications 1 à 7, le dispositif (301) comprenant :
- une unité de calcul (200, 305) qui est réalisée pour reconnaître un pédalage en danseuse d'un cycliste de la bicyclette (400), et
- un actionneur (210, 300) disposé sur une barre de direction (330) de la bicyclette (400),
l'unité de calcul (200, 305) étant réalisée pour déterminer, en fonction du pédalage en danseuse reconnu, un rapport de transmission prédéfini entre l'angle de guidon (β) et l'angle de braquage (α) de la roue avant (320), et pour transmettre le rapport de transmission prédéfini à l'actionneur (210, 300), l'actionneur (210, 300) étant réalisé pour régler le rapport de transmission prédéfini au niveau de la barre de direction (330).

9. Dispositif (301) selon la revendication 8, **caractérisé en ce que** le dispositif (301) comprend en outre :
- un premier capteur (220) qui est réalisé pour détecter un couple généré par un cycliste pour faire avancer la bicyclette (400), et/ou
- un deuxième capteur (230) qui est réalisé pour détecter une position inclinée de la bicyclette (400),
l'unité de calcul (200, 305) étant réalisée en outre pour reconnaître le pédalage en danseuse en fonction du couple détecté et/ou de la position inclinée détectée.

10. Dispositif (301) selon l'une quelconque des revendications 8 et 9, **caractérisé en ce que** le dispositif (301) comprend en outre :
- un troisième capteur (240) qui est réalisé pour détecter une vitesse de la bicyclette (400), l'unité de calcul (200, 305) étant en outre réalisée pour déterminer le rapport de transmission prédéfini en fonction de la vitesse détectée.

11. Dispositif (301) selon l'une quelconque des revendications 8 à 10, **caractérisé en ce que** l'actionneur (210, 300) est réalisé sous la forme d'une transmission CVT, la transmission CVT étant réalisée pour régler en continu un rapport de transmission entre deux composants de la barre de direction (330), mobiles l'un par rapport à l'autre.

12. Dispositif (301) selon l'une quelconque des revendications 8 à 11, **caractérisé en ce que** le dispositif (301) comprend en outre :
- une unité de génération de signal (260) qui est réalisée pour générer un signal du cycliste,
l'unité de calcul (200, 305) étant réalisée pour modifier le rapport de transmission prédéfini en fonction du signal généré.

13. Dispositif (301) selon l'une quelconque des revendications 8 à 12, **caractérisé en ce que** le dispositif (301) comprend en outre :
- un quatrième capteur (250) qui est réalisé pour détecter l'angle de guidon (β),
l'unité de calcul (200, 305) étant réalisée pour modifier, en particulier de manière linéaire ou non linéaire, le rapport de transmission prédéfini entre l'angle de guidon (β) et l'angle de braquage (α) de la roue avant (320) en cas d'augmentation de l'angle de guidon (β).

14. Bicyclette (400), en particulier bicyclette à commande électrique, comprenant un dispositif (301) selon l'une quelconque des revendications 8 à 13.
